# EUROPEAN PATENT APPLICATION

(11) **EP 1 557 446 A1**
(43) Date of publication of application: **27.07.2005**
(21) Application number: 05250244.0
(22) Date of filing: 19.01.2005
(51) Int. Cl.: C08L 83/04, C08K 3/36

(54) **Silicone rubber compositions, their preparation and use**

(30) Priority: 22.01.2004 JP 2004014762
(71) Applicant: Shin-Etsu Chemical Co., Ltd., Chiyoda-ku, Tokyo 100-0004 (JP)
(72) Inventor: Igarashi, Minoru, Shin-Etsu Chemical Co., Ltd., Matsuida-machi, Usui-gun, Gunma 379-0224 (JP); Hayashida, Osamu, Shin-Etsu Chemical Co., Ltd., Matsuida-machi, Usui-gun, Gunma 379-0224 (JP); Nakamura, Tsutomu, Shin-Etsu Chemical Co., Ltd., Matsuida-machi, Usui-gun, Gunma 379-0224 (JP)
(74) Representative: Stoner, Gerard Patrick

(57) **Abstract**

A silicone rubber composition comprising
(A) 100 parts by weight of an organopolysiloxane having a degree of polymerization of 100 or higher and having at least two silicon-bonded alkenyl groups in the molecule;
(B) from 3 to 100 parts by weight of a wet silica having the following properties:
   specific surface area (the BET method) of 50 m²/g or larger,
   specific surface area (the BET method)/specific surface area (the CTAB method) of from 1.0 to 1.3, and
   water content of 4% or lower; and
(C) an effective amount of a curing agent. The silicone rubber composition can be obtained without foaming even in hot air vulcanization and even if wet silica is used therein, and the silicone rubber composition gives a silicone rubber excellent in electrical properties such as electrical insulating properties.

## Description

The present invention relates to silicone rubber compositions comprising wet silica.

### BACKGROUND

Silicone rubbers are widely used in the fields of electrical appliances, motor vehicles, architectures, medical field, food industry, and other various fields, because of their excellent properties such as weatherability, electrical properties, low compression set, heat resistance, and cold resistance. For example, silicone rubbers are used as rubber contacts in remote controllers, typewriters, word processors, computer terminals, musical instruments, and the like, architectural gaskets, rolls in business machines, such as fixing rolls, development rolls, transfer rolls, charging rolls, and paper feed rolls, vibration-proof rubbers for audio appliances and the like, packings for compact disks, and wire covering materials.

A silicone rubber composition which cures to give a silicone rubber is generally obtained by incorporating a curing agent into a mixture of an organopolysiloxane as the base polymer and a reinforcing filler represented by silicas.

Reinforcing silicas are roughly divided into dry (fumed) silica and wet (precipitated) silica. Dry silica, however, is more expensive than wet silica, and silicone rubber compositions containing dry silica have poor suitability for general-purpose use.

On the other hand, silicone rubber compositions for extrusion molding generally contain dry silica. This is because use of wet silica is apt to result in a foaming phenomenon in hot air vulcanization due to the vaporization of the water adsorbed on the walls of inner pores of the silica. There is also a problem that use of wet silica results in poorer electrical insulating properties than in the case of using dry silica.

For eliminating those problems, a method in which a silicone rubber compound is treated at a temperature of 200°C for higher has been proposed in JP-A-7-133356 (patent document 1). Furthermore, a method in which wet silica is hydrophobized has been proposed in JP-A-4-202479 (patent document 2), JP-A-8-170029 (patent document 3), JP-A-2003-137532 (patent document 4), and JP-A-2003-160327 (patent document 5).

However, the former method necessitates a special step in producing a composition, while the latter method has disadvantages that the hydrophobized wet silica obtained is expensive and the inhibition of foaming in hot air vulcanization is insufficient.

In addition, there has been a problem that the water adsorbed on the walls of inner pores of silica is not always removed sufficiently by merely conducting a heat treatment or surface treatment.
Patent Document 1 : JP-A-7-133356
Patent Document 2 : JP-A-4-202479
Patent Document 3 : JP-A-8-170029
Patent Document 4 : JP-A-2003-137532
Patent Document 5 : JP-A-2003-160327
An aspect of the present proposals is to provide a silicone rubber composition which comprises a wet silica and which is inhibited from foaming in hot air vulcanization despite of the use of the wet silica and is capable of providing a silicon rubber excellent in electrical properties such as electrical insulating properties.

The present inventor made extensive studies in order to accomplish the object. As a result, it was found that a silicone rubber composition obtainable by compounding an organopolysiloxane having a degree of polymerization of 100 or higher and having at least two silicon-bonded alkenyl groups with a wet silica having a specific surface area (the BET method) of 50 m²/g or larger, a specific surface area (the BET method)/specific surface area (the CTAB method) of from 1.0 to 1.3, and a water content of 4% or lower and with a curing agent is inhibited from foaming even in hot air vulcanization, and that the silicone rubber obtainable by curing this composition is excellent in electrical properties such as electrical insulating properties. The present invention has been achieved based on this finding.

Thus, the present invention provides a silicone rubber composition comprising
(A) 100 parts by weight of an organopolysiloxane having a degree of polymerization of 100 or higher and having at least two silicon-bonded alkenyl groups in the molecule;
(B) from 3 to 100 parts by weight of a wet silica having the following properties:
   specific surface area (the BET method) of 50 m²/g or larger,
   specific surface area (the BET method)/specific surface
   area (the CTAB method) of from 1.0 to 1.3, and
   water content of 4% or lower; and
(C) an effective amount of a curing agent.

According to the present invention, a silicone rubber composition containing wet silica which, despite the use of wet silica, is inhibited from foaming in hot air vulcanization and can hence be extrusion-molded, can be obtained. The silicone rubber obtained by curing this composition is excellent in electrical properties such as electrical insulating properties. Methods of preparing such compositions are an aspect of the inventions, also methods of using them to make articles comprising the silicone rubber, especially by hot air vulcanisation such as extrusion moulding, and the articles themselves.

### FURTHER EXPLANATION; OPTIONS AND PREFERENCES

Component (A) is an organopolysiloxane having a degree of polymerization of 100 or higher and having at least two silicon-bonded alkenyl groups. Typical examples thereof are represented by the following average composition formula (II):

R² ₐSiO_{(4-a) /2} (II)

(wherein R²'s are the same or different and each represent an unsubstituted or substituted, monovalent hydrocarbon group and symbol "a" is a positive number of from 1.95 to 2.05) .

In average composition formula (II), R²'s are the same or different and each represent an unsubstituted or substituted, monovalent hydrocarbon group. This hydrocarbon group preferably is one having generally from 1 to 12, more preferably from 1 to 8 carbon atoms. Examples thereof include alkyl groups such as methyl, ethyl, propyl, butyl, hexyl, and octyl, cycloalkyl groups such as cyclopentyl and cyclohexyl, alkenyl groups such as vinyl, allyl, and propenyl, cycloalkenyl groups, aryl groups such as phenyl and tolyl, aralkyl groups such as benzyl and 2-phenylethyl, and groups formed by replacing part or all of the hydrogen atoms of these groups by a halogen atom or cyano group, etc., such as trifluoropropyl. As R², methyl, vinyl, phenyl, and trifluoropropyl are more preferable, and methyl and vinyl are particularly preferable. It is preferred that at least 80% by mole, especially at least 90% by mole, of the R²'s be methyl.

Specifically, preferred examples of the organopolysiloxane include those in which the main chain is constituted of a dimethylsiloxane unit and those comprising the dimethylpolysiloxane main chain which partly contains a diphenylsiloxane unit, a methylvinylsiloxane unit, a methyl-3,3,3-trifluoropropylsiloxane unit, or the like respectively having phenyl group, vinyl group, 3,3,3-trifluoropropyl group, or the like.

The organopolysiloxane as component (A) should have two or more alkenyl groups, preferably vinyl groups, per molecule. It is preferred that 0.01 to 20% by mole, especially 0.02 to 10% by mole, be alkenyl groups.

The alkenyl groups each may be bonded to the silicon atom present at the end of the molecular chain or bonded to a silicon atom in a side chain, or the alkenyl groups may be bonded to both a terminal silicon atom and a silicon atom in a side chain. It is, however, preferred that the alkenyl groups be bonded at least to the silicon atoms at the ends of the molecular chain. Specifically, the organopolysiloxane is preferably one in which each molecular chain end has been blocked with a dimethylvinylsilyl, methyldivinylsilyl, or trivinylsilyl group or the like.

Symbol "a" is a positive number of from 1.95 to 2.05. Although the molecular chain is basically linear, it may be branched in such a degree as not to impair rubber elasticity.

The degree of polymerization of the organopolysiloxane as component (A) is 100 or higher, preferably from 3,000 to 100,000, especially preferably from 4,000 to 20,000. In case where the degree of polymerization thereof is lower than 100, sufficient rubber strength may not be obtained.

The organopolysiloxane as component (A) may be of one kind or may be a combination of two or more kinds each differ in molecular structure or degree of polymerization.

Such an organopolysiloxane may be obtained by utilizing a known method. For example, it may be obtained by subjecting one or more organohalogenosilanes to hydrolytic (co)condensation or by subjecting a cyclic polysiloxane to ring-opening polymerization with the aid of an alkaline or acid catalyst.

The wet silica as component (B) should have a specific surface area (the BET method) of 50 m²/g or larger, preferably 100 m²/g or larger, more preferably from 100 to 400 m²/g; a specific surface area (the BET method)/specific surface area (the CTAB method) of from 1.0 to 1.3, preferably from 1.0 to 1.2, more preferably from 1.0 to 1.1; and a water content of 4% or lower, preferably 3% or lower.

In case where the specific surface area (the BET method) of the silica is smaller than 50 m²/g, the impartation of mechanical strength is insufficient. In case where the specific surface area (the BET method)/specific surface area (the CTAB method) is out of the range of from 1.0 to 1.3 and the water content exceeds 4%, the composition is apt to foam in hot air vulcanization. In addition, the silicone rubber obtained from this composition may have insufficient electrical properties.

The specific surface area (the BET method) is a surface area determined from the amount of nitrogen adsorbed, while the specific surface area (the CTAB method) is a surface area determined from the amount of N-cetyl-N,N,N-trimethylammonium bromide adsorbed. The closer the ratio between these specific surface areas to 1, the smaller the amount of pores present in inner parts of the silica. Namely, this silica has a structure in which water adsorption is less apt to occur in inner pores. Because of this structure, the water can be easily removed even when the amount of water contained in this silica is apparently large.

The surface of the wet silica as component (B) may be subjected to treatment to impart hydrophobicity according to need by utilizing a known treating agent such as, e.g., chlorosilane or hexamethyldisilazane.

The wet silica to be used as component (B) is commercially available. For example, Zeosil 172X (manufactured by Rhodia Japan Ltd.) is usable.

The amount of the wet silica to be added as component (B) is from 3 to 100 parts by weight, preferably from 10 to 70 parts by weight, more preferably from 30 to 60 parts by weight, per 100 parts by weight of component (A). In case where the amount of component (B) is smaller than 3 parts by weight, this addition amount may be too small to obtain a reinforcing effect. In case where the amount thereof exceeds 100 parts by weight, the composition may have impaired processability and the silicone rubber obtained therefrom may have a reduced mechanical strength.

The wet silica as component (B) may be of one kind or may be a combination of two or more kinds.

The curing agent as component (C) is not particularly limited as long as it can cure the rubber composition of the present invention. However, it is preferred to use (i) a curing agent for a crosslinking reaction by addition reaction, i.e., a combination of an organohydrogenpolysiloxane and a hydrosilylation catalyst or (ii) an organic peroxide; which are known curing agents for silicone rubbers.

The curing agent as component (C) may be of one kind or may be a combination of two or more kinds.

The hydrosilylation catalyst in the curing agent (i) for a crosslinking reaction by addition reaction is a catalyst which causes an aliphatic unsaturated bond (alkenyl group, diene group, etc.) of component (A) to undergo addition reaction with a silicon-bonded hydrogen atom (SiH group) of the organohydrogenpolysiloxane.

Examples of the hydrosilylation catalyst include platinum-group metal catalysts such as elemental metals themselves in the platinum group and compounds containing the same. Such metals and compounds which have been known as catalysts for silicone rubber compositions which cure based on the addition reaction may be used. Examples thereof include finely particulate platinum-group metals deposited on a support such as silica, alumina, or silica gel, alcohol solutions of platinic chloride, chloroplatinic acid, or chloroplatinic acid hexahydrate, palladium catalysts, and rhodium catalysts. Platinum or a platinum compound is preferred. The amount of the catalyst to be added is not particularly limited as long as the addition reaction can be accelerated. Although the catalyst is generally used in an amount of 1 ppm to 1% by weight in terms of platinum-group metal amount, the amount thereof is preferably in the range of from 10 to 500 ppm. When the amount of the catalyst added is smaller than 1 ppm, the addition reaction sometimes may not proceed sufficiently, resulting in insufficient cure. On the other hand, even when the catalyst is added in an amount exceeding 1% by weight, this increase in catalyst amount may exert limited influence on reactivity and may be uneconomical.

Besides the catalyst described above, an addition crosslinking inhibitor may be used for the purpose of regulating the rate of curing. Examples thereof include ethynylcyclohexanol and tetracyclomethylvinylpolysiloxane.

The organohydrogenpolysiloxane may be either linear, cyclic, or branched, as long as it has 2 or more, preferably 3 or more SiH groups per molecule. Any of organohydrogenpolysiloxanes known as crosslinking agents for silicone rubber compositions of the addition reaction curing type may be used. For example, an organohydrogenpolysiloxane represented by the following average composition formula (III) may be used.

R³ ₚH_{q}SiO_{(4-p-q)/2} (III)

In average composition formula (III), R³'s may be the same or different and each represent an unsubstituted or substituted, monovalent hydrocarbon group. The hydrocarbon group preferably is one having no aliphatic unsaturated bond. Each R³ preferably is a monovalent hydrocarbon group having generally from 1 to 12, especially from 1 to 8 carbon atoms. Examples thereof include alkyl groups such as methyl, ethyl, and propyl, cycloalkyl groups such as cyclohexyl, alkenyl groups such as vinyl, allyl, butenyl, and hexenyl, aryl groups such as phenyl and tolyl, aralkyl groups such as benzyl, 2-phenylethyl, and 2-phenylpropyl, and groups formed by replacing part or all of the hydrogen atoms of these groups by a halogen atom, etc., such as 3,3,3-trifluoropropyl. Symbols "p" and "q" are positive numbers satisfying 0 ≤ p <3, preferably 1 ≤ p ≤2.2, 0 < q ≤ 3, preferably 0.002 ≤ q ≤ 1, and 0 < p+q ≤ 3, preferably 1.002 ≤ p+q ≤3.

Although the organohydrogenpolysiloxane has 2 or more, preferably 3 or more SiH groups per molecule, these SiH groups may be present at the molecular chain ends or in the molecular chain or may be present both at the molecular chain end and in the molecular chain. This organohydrogenpolysiloxane preferably has a viscosity as measured at 25°C of from 0.5 to 10,000 cSt, especially from 1 to 300 cSt.

Specific examples of this organohydrogenpolysiloxane include compounds represented by the following structural formulae.

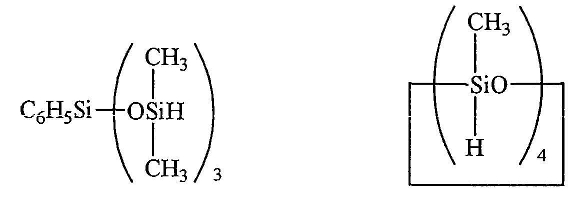

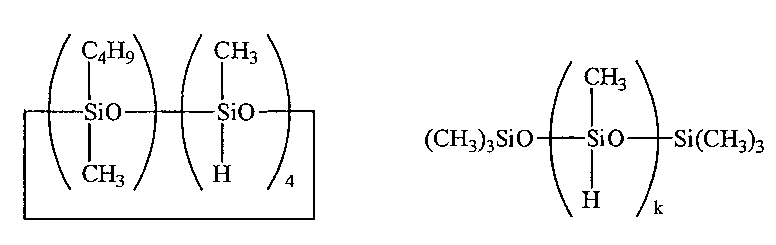

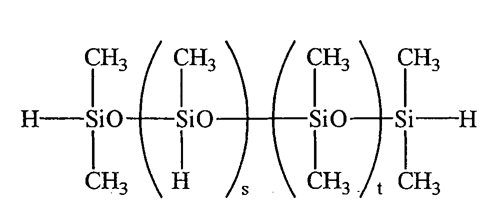

### (In the formulae, "k" is an integer of from 2 to 10 and "s" and "t" each are an integer of from 0 to 10.)

The amount of the organohydrogenpolysiloxane to be incorporated is preferably from 0.1 to 40 parts by weight per 100 parts by weight of component (A). It is appropriate that the proportion of silicon-bonded hydrogen atoms (≡SiH groups), in terms of the number thereof per alkenyl group of component (A), should be in the range of from 0.5 to 10, preferably from 0.7 to 5. When the proportion of silicon-bonded hydrogen atoms is smaller than 0.5, crosslinking may sometimes be insufficient and sufficient mechanical strength may not be obtained. When the proportion thereof exceeds 10, the rubber obtained through curing may sometimes have reduced physical properties, in particular, impaired heat resistance and impaired compression set characteristics.

Examples of the organic peroxide (ii) include benzoyl peroxide, 2,4-dichlorobenzoyl peroxide, p-methylbenzoyl peroxide, o-methylbenzoyl peroxide, 2,4-dicumyl peroxide, 2,5-dimethyl-2,5-bis(t-butylperoxy)hexane, di-t-butyl peroxide, t-butyl perbenzoate, and 1,6-hexanediol bis-t-butylperoxycarbonate. The amount of the organic peroxide to be added is preferably from 0.1 to 15 parts by weight, especially from 0.2 to 10 parts by weight, per 100 parts by weight of component (A).

The silicone rubber composition of the present invention preferably further contains an organosilane or siloxane represented by the following general formula (I) as component (D) in addition to the components described above. The incorporation of component (D) improves the workability and extrudability of the silicone rubber composition of the present invention. 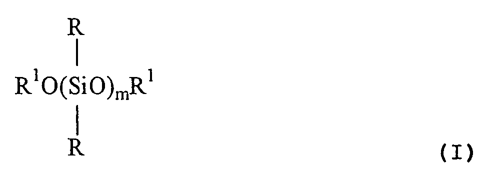 (In the formula, R¹'s are the same or different and each represent an alkyl group or a hydrogen atom; R's are the same or different and each represent an unsubstituted or substituted, monovalent hydrocarbon group; and m is a positive number of from 1 to 50.)

In the formula, R¹'s are the same or different and each are an alkyl group or a hydrogen atom. Namely, the organosilane or siloxane represented by the general formula (I) has an alkoxy group or hydroxy group at each end of the molecular chain. Examples of R¹ include a hydrogen atom and alkyl groups having from 1 to 4 carbon atoms; such as methyl, ethyl, propyl, and butyl. Methyl, ethyl, and hydrogen atom are preferable. The groups "R" preferably are ones each having generally from 1 to 12, especially from 1 to 8 carbon atoms. Examples of the groups "R" include alkyl groups such as methyl, ethyl, propyl, and butyl, cycloalkyl groups such as cyclohexyl, alkenyl groups such as vinyl, allyl, butenyl, and hexenyl, aryl groups such as phenyl and tolyl, aralkyl groups such as β-phenylpropyl, and groups formed by replacing part or all of the carbon-bonded hydrogen atoms of these groups by a halogen atom, cyano group, etc., such as chloromethyl, trifluoropropyl, and cyanoethyl. Methyl, vinyl, phenyl, and trifluoropropyl are preferable, and methyl and vinyl are more preferable.

Symbol "m" is a positive number of from 1 to 50, preferably from 1 to 30. In case where "m" exceeds 50 , the addition of a large amount of component (D) may be required for sufficient effects, while the incorporation of a large amount of component (D) may result in reduced rubber properties.

The amount of component (D) to be incorporated is preferably from 0.1 to 50 parts by weight, more preferably from 0.5 to 30 parts by weight, per 100 parts by weight of component (A). When the amount of component (D) incorporated is smaller than 0.1 part by weight, the effect of addition may sometimes be insufficient. When its amount exceeds 50 parts by weight, the rubber composition obtained may sometimes have tackiness and reduced rubber properties.

Component (D) may be of one kind or may be a combination of two or more kinds.

It is preferred that a release agent (E) be added to the silicone rubber composition of the present invention. The addition of a release agent improves moldability and processability in extrusion molding, etc. Examples of the release agent include higher fatty acids such as stearic acid, palmitic acid, oleic acid, and lauric acid, metal salts of higher fatty acids, such as zinc stearate, nickel stearate, calcium stearate, magnesium stearate, zinc oleate, and calcium oleate, esters of higher fatty acids with alcohols, such as ethyl stearate, stearyl stearate, ethyl oleate, butyl oleate, and castor oil (glycerol ester of ricinoleic acid), and amides of higher fatty acids, such as stearamide, oleamide, and palmitamide.

The amount of the release agent to be added as component (E) is preferably from 0 to 3 parts by weight, especially from 0.01 to 2 parts by weight, per 100 parts by weight of the sum of components (A) and (B). When component (E) is added in too large an amount, properties such as compression set may sometimes decrease.

The release agent as component (E) may be of one kind or may be a combination of two or more kinds.

In addition, the components described above, known additives for use in silicone rubber compositions may be added as optional components to the silicone rubber composition of the present invention according to need as long as the addition thereof does not hinder the effects of the present invention. Examples of such additives include flame retardants or heat resistance improvers, such as iron oxide and halogen compounds, antioxidants, ultraviolet absorbers, and colorants.

Processes for producing the rubber composition of the present invention are not particularly limited. For example, the composition may be obtained by kneading given amounts of the components described above with a two-roll mill, kneader, Banbury mixer, or the like. A heat treatment (kneading with heating) may be conducted according to need. Examples of this procedure include a method which comprises kneading components (A) and (B) together, conducting a heat-treatment according to need, and then adding component (C) thereto. Although the heat treatment is not particularly limited with respect to temperature and period, it is preferred to conduct the treatment at a temperature of from 100 to 250°C, especially from 140 to 180°C, for about 30 minutes to 5 hours.

Conditions for curing the silicone rubber composition of the present invention are not particularly limited, and may be selected according to the molding method to be used. In general, the composition can be cured by heating at from 80 to 500°C, especially from 100 to 400°C, for about a few seconds to 1 hour, especially about 5 seconds to 30 minutes. Postcure may be conducted at from 100 to 250°C for about 10 minutes to 10 hours.

The silicone rubber composition of the present invention is can be subjected for extrusion molding, and usual extrusion molding methods may be utilized.

The present invention will be explained below in more detail by reference to Examples and Comparative Examples, but the present invention should not be construed as being limited to the following Examples. Unless otherwise indicated, all parts, percentages, ratios and the like used in this specification are by weight, which are the same with those by mass, respectively. The method of property examination, method of foaming test in hot air vulcanization, and method of determining the water content of silica which were used in the Examples and Comparative Examples are shown below.

### Method of Property Examination

A silicone rubber composition was cured under the conditions of 165°C and 10 minutes, and the resultant cured rubber was examined for hardness (durometer A) and tensile strength in accordance with JIS K6249.

### Foaming Test in Hot Air Vulcanization

A 100 parts of a rubber compound obtained was kneaded together with 1.3 parts of p-methylbenzoyl peroxide using a two-roll mill. The resultant mixture was formed into a sheet having a thickness of 2 mm and cured in a 350°C drying oven. The degree of foaming of this sheet was visually examined.

### Method of Determining Water Content of Silica

The water content of a silica was determined from the weight of the silica as measured at 25°C and the weight of the silica heated at 110°C for 2 hours.

### EXAMPLE 1

A 100 parts of an organopolysiloxane having 99.825% by mole dimethylsiloxane units, 0.15% by mole methylvinylsiloxane units, and 0.025% by mole dimethylvinylsiloxane units and having an average degree of polymerization of about 8,000 was compounded, by means of a kneader, with 40 parts of a silica having a specific surface area (the BET method) of 180 m²/g, a specific surface area (the BET method)/specific surface area (the CTAB method) of 1.06, and a water content of 2.3% (Zeosil 172X (manufactured by Rhodia Japan Ltd.)) and 5 parts of a dimethylpolysiloxane having a silanol group at each end and a viscosity of 29 cSt (23°C). The resultant mixture was heat-treated at 180°C for 2 hours to produce a silicone rubber compound.

To 100 parts of the rubber compound obtained was added 0.5 parts of 1,6-hexanediol bis-t-butylperoxycarbonate. This mixture was press-molded for curing at 165°C for 10 minutes to obtain a sheet for property examination. Thereafter, postcure was conducted at 200°C for 4 hours. The physical properties thereof were evaluated and the results are shown in Table 1.

The results of the foaming test in hot air vulcanization are also shown in Table 1.

### EXAMPLE 2

A sheet for property examination was molded in the same manner as in Example 1, except that Zeosil 172X was used after drying at 110°C for 1 hour. The physical properties thereof were evaluated and the results are shown in Table 1.

The results of the foaming test in hot air vulcanization are also shown in Table 1.

### EXAMPLE 3

A sheet for property examination was molded in the same manner as in Example 1, except that 0.1 part of calcium stearate was added during the silicone rubber compound production. The physical properties thereof were evaluated and the results are shown in Table 1.

The results of the foaming test in hot air vulcanization are also shown in Table 1.

### COMPARATIVE EXAMPLE 1

A sheet for property examination was molded in the same manner as in Example 1, except that Zeosil 132 (manufactured by Rhodia Japan Ltd.) was used in place of the Zeosil 172X. The physical properties thereof were evaluated and the results are shown in Table 1.

The results of the foaming test in hot air vulcanization are also shown in Table 1.

### COMPARATIVE EXAMPLE 2

A sheet for property examination was molded in the same manner as in Example 1, except that Zeosil 132 which had been dried at 110° C for 1 hour was used in place of the Zeosil 172X. The physical properties thereof were evaluated and the results are shown in Table 1.

The results of the foaming test in hot air vulcanization are also shown in Table 1.

### COMPARATIVE EXAMPLE 3

A sheet for property examination was molded in the same manner as in Example 1, except that Zeosil 132 which had been dried at 110°C for 2 hours was used in place of the Zeosil 172X. The physical properties thereof were evaluated and the results are shown in Table 1.

The results of the foaming test in hot air vulcanization are also shown in Table 1.

### COMPARATIVE EXAMPLE 4

A sheet for property examination was molded in the same manner as in Example 1, except that Zeosil 172X was used after the water content thereof was increased by adding water. The physical properties thereof were evaluated and the results are shown in Table 1.

The results of the foaming test in hot air vulcanization are also shown in Table 1.

### COMPARATIVE EXAMPLE 5

A sheet for property examination was molded in the same manner as in Example 1, except that Nipsil LP (manufactured by Nippon Silica Co., Ltd.) was used in place of the Zeosil 172X. The physical properties thereof were evaluated and the results are shown in Table 1.

The results of the foaming test in hot air vulcanization are also shown in Table 1.

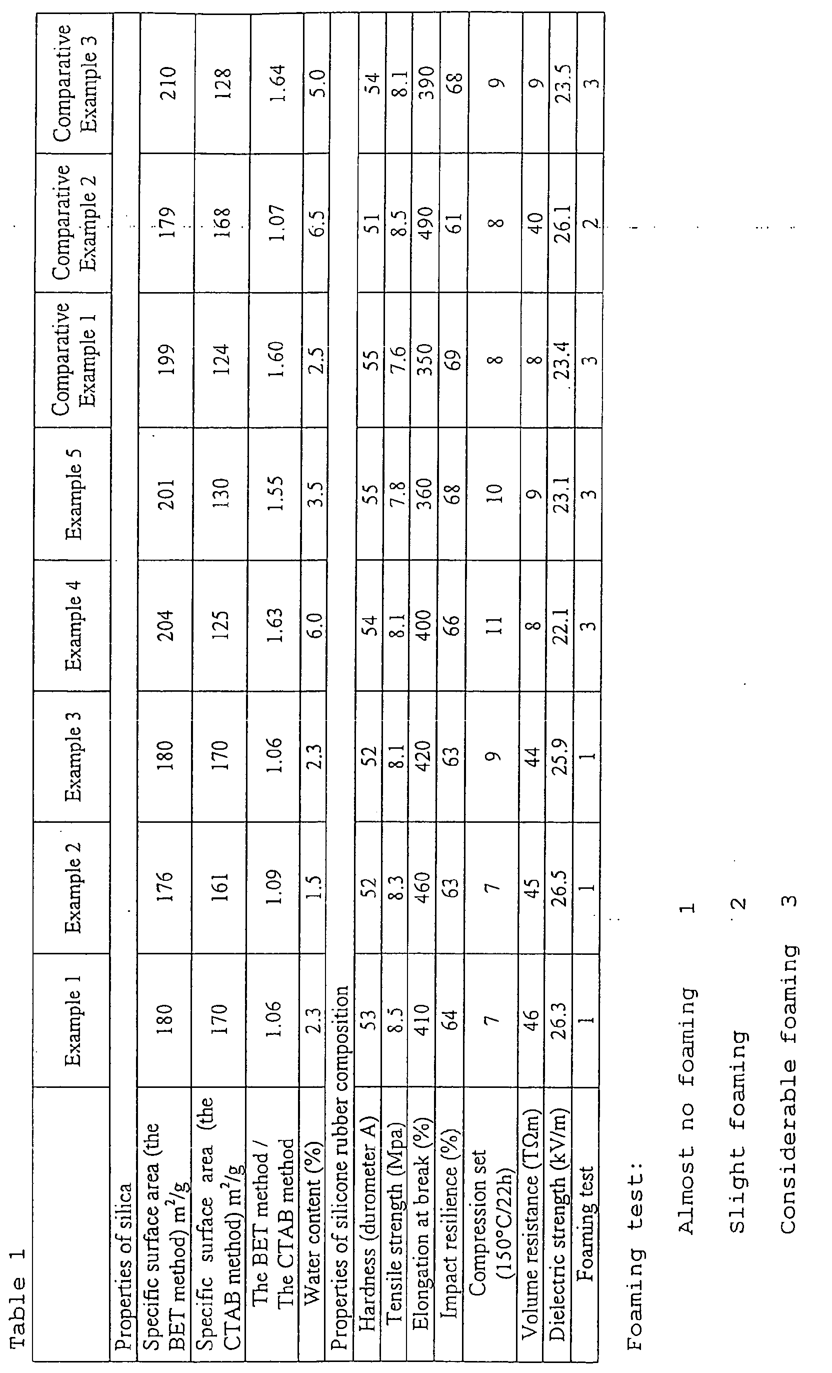

While the present invention has been described in detail and with reference to specific embodiments thereof, it will be apparent to one skilled in the art that various changes and modifications can be made therein without departing from the scope thereof.

This application is based on Japanese patent application No. 2004-014762 filed January 22, 2004, the entire contents thereof being hereby incorporated by reference.

## Claims

1. A silicone rubber composition comprising
(A) 100 parts by weight of organopolysiloxane having a degree of polymerization of 100 or higher and having at least two silicon-bonded alkenyl groups in the molecule;
(B) from 3 to 100 parts by weight of wet silica having the following properties:
specific surface area (the BET method) of 50 m²/g or larger,
specific surface area (the BET method)/specific surface area (the CTAB method) of from 1.0 to 1.3, and
water content of 4% or lower; and
(C) an effective amount of a curing agent.

2. The silicone rubber composition of claim 1, which further comprises as component (D) an organosilane or siloxane represented by the following general formula (I): 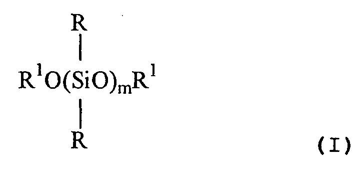 wherein R¹'s are the same or different and each represent an alkyl group or a hydrogen atom; R's are the same or different and each represent an unsubstituted or substituted, monovalent hydrocarbon group; and m is a positive number of from 1 to 50.

3. The silicone rubber composition of claim 1 or 2 wherein the curing agent comprises an organic peroxide or a combination of an organohydrogenpolysiloxane and a hydrosilylation catalyst.

4. The silicone rubber composition of claim 1, 2 or 3 which further comprises a release agent as component (E).

5. A silicone rubber composition according to any one of the preceding claims which is for use in extrusion moulding.

6. A method of moulding an article comprising silicone rubber, the method comprising curing a silicone rubber composition according to any one of claims 1 to 4.

7. A method according to claim 6 in which the silicone rubber composition is hot air vulcanised.

8. A method according to claim 6 or 7 in which the silicone rubber composition is extrusion moulded.
